(19) Europäisches Patentamt
European Patent Office
Office européen des brevets

(11) Veröffentlichungsnummer: **0 006 164**
**B1**

# (12) EUROPÄISCHE PATENTSCHRIFT

(45) Veröffentlichungstag der Patentschrift: **30.12.81**

(51) Int. Cl.³: **G 06 F 15/16**, G 06 F 13/00

(21) Anmeldenummer: **79101698.3**

(22) Anmeldetag: **01.06.79**

## (54) Multiprozessorsystem mit gemeinsam benutzbaren Speichern.

(30) Priorität: **16.06.78 US 916455**

(43) Veröffentlichungstag der Anmeldung: **09.01.80 Patentblatt 80/1**

(45) Bekanntmachung des Hinweises auf die Patenterteilung: **30.12.81 Patentblatt 81/52**

(84) Benannte Vertragsstaaten: **BE CH DE FR GB NL SE**

(56) Entgegenhaltungen:
**DE-A-1 549 426**
**DE-A-2 025 933**
**DE-A-2 311 503**
**GB-A-1 331 786**
**GB-A-1 411 182**
**US-A-4 051 551**

(73) Patentinhaber: **International Business Machines Corporation, Armonk, N.Y. 10504 (US)**

(72) Erfinder: **Bederman, Seymour, 2838 Larkspur Street, Yorktown Heights New York 10598 (US)**

(74) Vertreter: **Teufel, Fritz, Dipl.-Phys., Schönaicher Strasse 220, D-7030 Böblingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG.

# Multiprozessorsystem mit gemeinsam benutzbaren Speichern

Die Erfindung betrifft ein Multiprozessorsystem nach dem Oberbegriff des Hauptanspruchs.

Im Stand der Technik sind Multiprozessorsysteme bekannt, bei denen die verschiedenen Prozessoren zu jeweils verschiedenen Zeiten mit einem gemeinsamen Speicher zusammenarbeiten. Die Schnittstellen Prozessor-Speicher sind dabei synchron, d.h. ein bestimmter Prozessor stösst eine Speicherzugriffsoperation an und wartet dann während einer im voraus nicht bestimmbaren Zeit, bis diese Zugriffsoperation abgeschlossen ist.

Aus der US-Patentschrift US-PS 3 940 743 ist ein aus mehreren asynchron arbeitenden Rechnern bestehendes Multiprozessorsystem bekannt, bei dem der Prozessor eines Rechners zum Speicher eines anderen Rechners zugreifen kann; die dazu erforderliche Anpassungsschaltung ist jedoch sehr aufwendig; ausserdem muss sie für jedes Paar von Rechnern, die gegenseitige Speicherzugriffe erlauben, vorgesehen werden. Der Zugriff ist relativ langsam, da er mit der üblichen Eingabe-/Ausgabeprozedur über die jeweiligen System-Sammelleitungen erfolgt.

Im Fall von Prozessoren mit synchroner Schnittstelle zu dem Speicher, bei dem also keine unbestimmten Wartezeiten zulässig sind, müssen Vorkehrungen getroffen werden, dass ein Prozessor nur dann eine Speicherzugriffsoperation zu einem bestimmten gemeinsam benutzten Speichermodul beginnt, wenn für die anderen Prozessoren keine Möglichkeit besteht, Anforderungen an denselben Speichermodul zu stellen, bevor die begonnene Zugriffsoperation abgeschlossen ist. Dazu sind üblicherweise zusätzliche logische Schaltkreise erforderlich, mit denen es den Prozessoren ermöglicht wird, zwischen sich gegenseitig störenden Zugriffswünschen zu einem gemeinsam benutzten Speicher zu entscheiden. Die dazu erforderlichen Änderungen im Aufbau der Prozessoren erweisen sich als störend, da sie relativ kompliziert und damit teuer sind.

Die vorliegende Erfindung stellt sich daher die Aufgabe, mit geringen zusätzlichen Schaltkreisen und ohne Eingriff in die verfügbaren Prozessoren ein Multiprozessorsystem mit gemeinsam benutzten Speichern anzugeben.

Diese Aufgabe wird durch die im Hauptanspruch gekennzeichnete Erfindung gelöst; Ausgestaltungen der Erfindung sind in den Unteransprüchen angegeben.

In einem bevorzugten Ausführungsbeispiel wird eine Vielzahl von Mikroprozessoren betrachtet, die jeweils eine synchrone Speicherschnittstelle und Einrichtungen zum direkten externen Speicherzugriff (EMA External Memory Access) aufweisen. Das Auftreten sich gegenseitig störender Zugriffswünsche zum gemeinsamen Speicher wird durch Einbau eines zusätzlichen Schnittstellenadapters verhindert, in dem zwei in den Mikroprozessoren verfügbare Signale, nämlich EMA Stopanforderung und EMA Stopbetätigung, verarbeitet werden. Dieser zusätzliche Schnittstellenadapter steuert die Gesamtkonfiguration des Multiprozessors und verbindet die E/A-Sammelleitungen der Prozessoren. Der Schnittstellenadapter erfüllt im wesentlichen zwei Funktionen: einmal die Kommunikation zwischen den Prozessoren über die E/A-Sammelleitungen und zum anderen die gemeinsame Benutzung der Speichereinheiten, so dass jeder Prozessor während der Dauer einer Instruktion ungestört zum gemeinsamen Speicher zugreifen kann.

Ein Ausführungsbeispiel der Erfindung wird nun anhand von Zeichnungen näher erläutert. Es zeigen:

Fig. 1 ein vereinfachtes Blockschaltbild einer Konfiguration mit drei Prozessoren gemäss einem Ausführungsbeispiel der Erfindung.

Fign. 2A und 2B idealisierte Zeitdiagramme für E/A-Sammelleitungen für das Ausführungsbeispiel nach Fig. 1.

Fig. 3 ein vereinfachtes Blockschaltbild der Register und Puffer im Adapter für die Prozessorschnittstelle von Fig. 1.

Fign. 4A und 4B Einzelheiten der in Fig. 1 angegebenen Verbindungsleitungen zwischen Prozessor und Speicher.

Fig. 5 ein vereinfachtes Blockschaltbild der Logikschaltungen für die Betriebsartumschaltung des Prozessorschnittstellenadapters von Fig. 1.

Fig. 6 eine Tabelle, in der teilweise die verschiedenen aufeinanderfolgenden Zustände der Logik zum Umschalten der Betriebszustände von Fig. 5 zusammengefasst sind.

In Fig. 1 kann ein Hauptprozessor 1 über eine Speichersammelleitung 100 zu seinem zugehörigen lokalen Speicher 2 zugreifen oder aber zu einem der Speicher 3 und 4, die den Satellitenprozessoren 5 und 6 zugeordnet sind. Wenn Hauptprozessor 1 mit Speichermodul 3 zusammenarbeitet, sind die Torschaltungen 7 so eingestellt, dass sie die verschiedenen zwischen Speichermodul 3 und Prozessor 1 übertragenen Signale vermitteln. In diesem Fall kann der Satellitenprozessor 5 nicht zum Speichermodul 3 zugreifen. Auf ähnliche Weise kann Prozessor 1 über die Torschaltungen 8 zum Speichermodul 4 zugreifen, wobei Speicherzugriffe des Prozessors 6 zum Speichermodul 4 blockiert sind.

Der Prozessorschnittstellenadapter (EIA) 9 führt verschiedene Gruppen von Funktionen aus. Eine Funktionsgruppe ermöglicht es Prozessor 1, ein oder mehrere Datenbytes in ein Register (das später in Verbindung mit Fig. 3 näher beschrieben wird) innerhalb des EIA 9 zu laden und dann entweder den Prozessor 5 oder den Prozessor 6 zu unterbrechen. Der unterbrochene Satellitenprozessor 5 oder 6 führt dann ein Programm durch, mit dem die in den EIA Registern enthaltene Information ausgelesen wird. In ähnlicher Weise können die Satellitenprozessoren 5 und 6 Information in die EIA-Register laden und dann eine Unterbrechung des Hauptprozessors 1 veranlassen. Der Hauptprozessor führt in diesem Fall dann ein Programm durch, mit dem die in den EIA-Registern enthaltene Information ausgelesen wird. Auf diese Weise können kurze Botschaften zwischen dem Prozessor 1 und einem der Satellitenprozessoren 5 oder 6 ausgetauscht werden. Eine weitere Funktionsgruppe des Adapters EIA 9 ermöglicht es dem Prozessor 1, den Speichermodul 3 gemeinsam mit Prozessor 5 zu verwenden oder alternativ, den Speichermodul 4 mit Prozessor 6.

Im einzelnen stellt die auf die gemeinsame Benutzung von Speichern bezogene Funktionsgruppe von EIA 9 fünf verschiedene Betriebsarten der gemeinsamen Speicherbenutzung zur Verfügung, die im folgenden näher beschrieben sind:

Betriebsart 1: Die Prozessoren 5 und 6 können arbeiten, ohne dass deren jeweilige Speichermodule 3 und 4 gemeinsam mit Prozessor 1 benutzt werden.
Betriebsart 2: Prozessor 1 kann Speichermodul 3 gemeinsam mit Prozessor 5 benutzen.
Betriebsart 3: Prozessor 1 kann Speichermodul 3 für sich alleine mit Beschlag belegen und Zugriffe des Prozessors 5 zum Modul 3 blockieren.
Betriebsart 4: Prozessor 1 kann Modul 4 gemeinsam mit Prozessor 6 benutzen.
Betriebsart 5: Prozessor 1 kann Modul 4 für sich alleine mit Beschlag belegen und Zugriffe des Prozessors 6 zum Modul 4 blockieren.

Diese Betriebsarten der gemeinsamen Speicherbenutzung werden durch Befehle «Schreibe Betriebsart-Register» bestimmt, die von Prozessor 1 an den Adapter EIA 9 gegeben werden. Diese Steuerinformation bewirkt das Setzen oder Zurücksetzen von drei (später zu beschreibenden) Verriegelungsschaltungen in dem EIA. Die Bezeichnung dieser Verriegelungsschaltungen lautet: GEMEINSAM BENUTZT 3, GEMEINSAM BENUTZT 4 und AUSSCHLIESSLICH BENUTZT.

Bevor die Betriebsart zur gemeinsamen Benutzung von Speichern näher beschrieben wird, soll zuerst erläutert werden, wie Datenbotschaften zwischen den Prozessoren 1, 5 und 6 mit Hilfe des Adapters EIA 9 ausgetauscht werden. EIA 9 ist mit den E/A-Sammelleitungen 10, 11 und 12 der jeweiligen Prozessoren 1, 5 und 6 verbunden. Typischerweise hat jede der Sammelleitungen eine Übertragungskapazität von 16 Bits (d.h. ein Halbwort) von Informationen zwischen jedem Prozessor und den Registern innerhalb des EIA. Jede E/A-Sammelleitung enthält 16 bidirektionale Datenleitungen und zwei Kontrolleitungen (für die Steuerimpulse «Adresse/Befehl» und «Daten»), die von dem jeweiligen Prozessor beaufschlagt werden können. Ausserdem ist in jeder E/A-Sammelleitung eine Steuerleitung (GÜLTIG) enthalten, die von dem EIA beaufschlagt wird.

Fig. 2A zeigt den Ablauf der Signalfolgen, wenn ein Prozessor Daten in die EIA-Register schreibt, Fig. 2B, wenn ein Prozessor Daten aus den EIA-Registern liest. In beiden Fällen gibt der Prozessor zuerst die Adresse und den Befehl an den EIA und setzt den Steuerimpuls «Adresse/Befehl». Danach schreibt oder liest der Prozessor ein Datenhalbwort und gibt dabei den Steuerimpuls «Daten» ab. Der Adapter seinerseits bestätigt, dass die Daten vom Prozessor empfangen wurden, indem er das Signal GÜLTIG setzt.

Wenn der Steuerimpuls «Adresse/Befehl» aktiv ist, gibt der Prozessor 8 Bits Adressinformation und 8 Bits Befehlinformation auf die Datenleitungen der jeweiligen E/A-Sammelleitung. Dem EIA ist ein 8 Bit-Adresscode zugeordnet, der diesen Adapter von allen anderen Geräten unterscheidet, die ebenfalls an die E/A-Sammelleitung angeschlossen sind. Wenn der EIA seine eigene Adresse auf der Sammelleitung erkennt, decodiert er den Inhalt des 8-Bit-Befehlscodes und bereitet sich zur Durchführung des decodierten Befehls vor. Ein typischer Befehlssatz aus 1-Byte-Befehlen ist in der folgenden Tabelle dargestellt:

| Befehlscode | Bedeutung |
|---|---|
| (hexadezimal) | |
| X'02' | Zurücksetzen des Adapters |
| X'06' | Schreibe Basisstatusregister |
| X'07' | Lese Basisstatusregister |
| X'08' | Schreibe Bestimmungspufferregister – ungerade |
| X'0A' | Schreibe Bestimmungspufferregister – gerade |
| X'0B' | Lese Eingabepufferregister |
| X'0C' | Schreibe Betriebsartregister |
| X'0D' | Lese Betriebsartregister |

Es ist zu beachten, dass die Befehle X'0A', X'0C' und X'0D' nur für den Hauptprozessor 1 gelten und bei den Satellitenprozessoren 5 und 6 nicht anwendbar sind.

Der Adapter EIA 9 in Fig. 1 enthält drei 3-Bit-Basisstatusregister (BSR) 13, 14 und 15 in Fig. 3 und drei Halbwortbestimmungspufferregister 16, 17 und 18. Die Register 13 und 16 sind an die E/A-Sammelleitung 10 des Hauptprozessors angeschlossen, die Register 14 und 17 an die E/A-Sammelleitung 11 des Satellitenprozessors und die Register 15 und 18 an die E/A-Sammelleitung 12 des Satellitenprozessors. Die folgende Tabelle zeigt typische Zuordnungen von Bits für jedes der drei Basisstatusregister 13, 14 und 15:

| Bit | Funktion |
|---|---|
| 0 | Bestimmungspuffer voll – ungerade |
| 1 | Bestimmungspuffer voll – gerade |
| 2 | Bestimmung freigegeben – ungerade |
| 3 | Bestimmung freigegeben – gerade |
| 4 | Eingabe bereit |
| 5 | Maschinenfehler |

| Bit | Funktion |
|---|---|
| 6 | Unterbrechung freigegeben |
| 7 | Unterbrechungsanforderung |

Hier ist zu beachten, dass die den Bits 1 und 3 zugeordneten Funktionen nur für das BSR 13 des Hauptprozessors gelten. Für die BSR 14 und 15 der Satellitenprozessoren werden die Bits 1 und 3 nicht benutzt.

Wenn Bit 6 eines bestimmten BSR auf den logischen Wert 1 gesetzt ist und Bit 7 ebenfalls auf den logischen Wert 1, so wird im zugehörigen Prozessor ein Unterbrechungssignal erzeugt. Jeder Prozessor kann den Zustand von Bit 6 in seinem zugehörigen BSR mit Hilfe des Befehls «Schreibe Basisstatusregister» steuern.

Die folgenden Beziehungen bestehen zwischen dem Status von Bit 6 und dem Status der Bits 2 und 3 der jeweiligen BSR.

1. Wenn Bit 6 im BSR 13 den Wert 1 hat, so steht Bit 2 in den BSR 14 und 15, die den Satellitenprozessoren 5 und 6 zugeordnet sind, ebenfalls auf dem Wert 1. Die Werte 0 sind für diese Bits ebenfalls identisch.

2. Wenn Bit 6 im BSR 14 des Satellitenprozessors 5 den Wert 1 hat, so hat Bit 2 im BSR des Hauptprozessors 1 ebenfalls den Wert 1. Die Zustände 0 sind für diese Bits ebenfalls identisch.

3. Wenn Bit 6 im BSR 15 des Satellitenprozessors 6 den Wert 1 aufweist, so steht Bit 3 im BSR des Hauptprozessors 1 ebenfalls auf dem Wert 1. Die Zustände 0 sind für diese Bits ebenfalls identisch.

In Fig. 3 speichern die Bestimmungspufferregister 16, 17 und 18 mit einer Kapazität von einem Halbwort die Daten, die von den Prozessoren über die E/A-Sammelleitungen abfliessen. Wenn der Hauptprozessor 1 eine Botschaft in das Bestimmungspufferregister 16 setzt, hat er ausserdem anzugeben, wohin die Botschaft gelangen soll: an den Satellitenprozessor 5, wenn der Befehl «Schreibe Bestimmungspufferregister – ungerade» verwendet wird oder an den Satellitenprozessor 6, wenn der Befehl «Schreibe Bestimmungspufferregister – gerade» vorliegt. Nach dem Einsetzen einer Botschaft in Pufferregister 16 setzt der EIA Bit 0 im BSR 16 des Hauptprozessors 1 auf den Wert 1, wenn sie für den Satellitenprozessor 5 bestimmt ist und aktiviert Leitung 82, die es erlaubt, den Inhalt des Bestimmungspufferregisters 16 über die Torschaltung 80 auf die E/A-Sammelleitung 11 zu geben, und zwar während der Ausführung eines vom Prozessor 5 angegebenen Befehls «Lese Eingabepufferregister». Der EIA setzt Bit 1 im BSR 16 des Hauptprozessors auf den Wert 1, wenn als Bestimmungsort der Satellitenprozessor 6 angegeben ist und aktiviert Leitung 83, wodurch bei der Ausführung eines vom Prozessor 6 abgegebenen Befehls «Lese Eingabepufferregister» der Inhalt des Bestimmungspufferregisters 16 über die Torschaltung 81 an die E/A-Sammelleitung 12 abgegeben werden kann.

Wenn Satellitenprozessor 5 eine Botschaft in das Bestimmungspufferregister 17 gibt (unter Verwendung des Befehls «Schreibe Pufferregister – ungerade), so setzt der EIA Bit 0 im BSR 14 auf den Wert 1 und aktiviert Leitung 87, wodurch bei der Ausführung eines vom Prozessor 1 abgegebenen Befehls «Lese Eingabepuffer» der Inhalt des Bestimmungspufferregisters 17 über die Torschaltung 85 auf die E/A-Sammelleitung 10 gegeben wird. Wenn Satellitenprozessor 6 eine Botschaft in das Bestimmungspufferregister 18 gibt (unter Verwendung des Befehls «Schreibe Pufferregister – ungerade»), so setzt EIA Bit 0 im BSR 15 auf den Wert 1 und aktiviert Leitung 86, wodurch während der Durchführung eines vom Prozessor 1 abgegebenen Befehls «Lese Eingapepuffer» der Inhalt des Bestimmungspufferregisters 18 über Torschaltung 84 auf die E/A-Sammelleitung 10 gegeben wird. Üblicherweise bekannte Logikschaltungen (nicht dargestellt) veranlassen, dass die logischen Torschaltungen 85 bezüglich der Schaltungen 84 mit Vorrang bedient werden, wenn sowohl 86 und 87 aktiv sind.

Wenn ein Prozessor ein Halbwort Information in sein zugehöriges Bestimmungspufferregister setzt, so wird ein Signal erzeugt, mit dem angezeigt wird, dass dieses Bestimmungspufferregister gefüllt ist. Mit diesem Signal wird Bit 4 des BSR des Bestimmungsprozessors gesetzt, das die Bedeutung «Eingabe bereit» besitzt. Wenn Bit 4 des BSR und ausserdem Bit 6 (Unterbrechung freigegeben) gesetzt sind, geht ein Unterbrechungsanforderungssignal an den Bestimmungsprozessor. Der Bestimmungsprozessor antwortet auf dieses Anforderungssignal durch Abgabe eines Befehls «Lese Eingabepufferregister» und liest anschliessend den Inhalt dieses Puffers aus. Das Signal für den gefüllten Zustand des Bestimmungspufferregisters wird zurückgesetzt, wenn der Inhalt des Pufferregisters vom Bestimmungsprozessor ausgelesen ist und das entsprechende Bit 0 oder Bit 1 im BSR wird auf den Wert 0 zurückgesetzt.

Wird der Aussendevorgang vom Hauptprozessor ausgelöst, so zeigen die Bits im Befehlsteil der Botschaft an, welcher der beiden Satellitenprozessoren die Botschaft empfangen soll, oder ob es sich bei der Botschaft um eine Steuerbotschaft handelt, die nur für den EIA bestimmt ist. Geht die Botschaft von einem Satellitenprozessor aus, so gibt dieser wiederum mit Hilfe von Bits im Befehlsbyte an, ob die Botschaft für den Hauptprozessor bestimmt ist oder ob es eine nur für den EIA bestimmte Steuerbotschaft ist. Beide Satellitenprozessoren können gleichzeitig Botschaften an den Hauptprozessor abgeben. Wenn ein oder mehrere Pufferregister der Satelliten voll sind, so unterbricht EIA den Hauptprozessor. Jeder Prozessor kann Bit 6 seines zugehörigen BSR so steuern, dass der EIA zur Abgabe eines Unterbrechungssignals an den betreffenden Prozessor freigegeben oder blockiert ist. Zwei der Bits (Bits 2 und 3) des BSR für den Hauptprozessor dienen zur Anzeige des Statuts der Bits «freigegeben/blockiert» in dem BSR der Satellitenprozessoren. In ähnlicher Weise zeigt eines der Bits (Bit 2) in den BSR der Satellitenprozessoren den Status des Bits «freigegeben/blockiert» in dem BSR des Hauptprozessors an. Durch Abfrage des Bits «freigegeben/blockiert», das dem Bestimmungsprozessor entspricht, kann ein Quellenprozessor (der die Botschaft abgibt) feststellen, ob ein Hindernis für die Übertragung einer Botschaft zum Bestimmungsprozessor besteht.

Eines der Bits (Bit 0) im BSR der Satellitenprozessoren gibt den Status «gefüllt/leer» der Satellitenpufferregister an. Durch Abfrage dieses Bits kann das Satellitenprogramm feststellen, ob seine frühere Botschaft an den Hauptprozessor von diesem gelesen wurde oder nicht. Zwei der Bits (Bit 0 und 1) im BSR dienen zur Anzeige, ob das Pufferregister des Hauptprozessors leer oder gefüllt ist; wenn es voll ist, geben diese Bits den jeweiligen Bestimmungssatellitenprozessor an. Durch Abfrage dieser Bits kann der Hauptprozessor feststellen, ob seine frühere Botschaft an einen Satellitenprozessor von diesem gelesen wurde.

Im folgenden soll nun die Funktion des Adapters EIA zur Steuerung der gemeinsamen Benutzung von Speichern zwischen dem Haupt- und den Satellitenprozessoren besprochen werden; dabei ist zu beachten, dass jeder Prozessor drei mit EIA-Logik verbundene Steuerleitungen aufweist. Diese Leitungen tragen die Bezeichnungen EMA Stopanforderung, EMA Stopbestätigung und EXIT. Die EMA Stopanforderungsleitung 19 in Fig. 1 stellt eine Eingangssteuerleitung für den Hauptprozessor 1 dar. Wenn diese Leitung 19 aktiv ist, teilt sie dem Hauptprozessor 1 mit, am Ende der gerade ausgeführten Instruktionen zu stoppen, so dass einer der Satellitenprozessoren Zugang zum Speicher erhält, der gemeinsam mit dem Hauptprozessor benutzt wird. Beispielsweise kann in der früher erwähnten Betriebsart 2 mit gemeinsam benutztem Speicher der Prozessor 1 den Speichermodul 3 gemeinsam mit Prozessor 5 benutzen, während in Betriebsart 4 der Prozessor 1 den Speichermodul 4 zusammen mit Prozessor 6 benutzt.

Die Leitung 20 «EMA Stopbestätigung» wird vom Hauptprozessor 1 angesetzt, wenn der Prozessor seinen gerade im Gang befindlichen Speicherzugriff abschliesst und danach bereit ist, Zugriffe zu dem Speicher, der einem anfordernden Prozessor zugeordnet ist, zu gestatten. Im Fall eines Satellitenprozessors, beispielsweise Prozessor 5, zeigt eine aktive Leitung 21 «EMA Stopbestätigung» an, dass der Satellitenprozessor seinen gerade im Gang befindlichen Speicherzugriff abgeschlossen hat und nun bereit ist, dem anfordernden Hauptprozessor 1 Zugriff zu seinem zugeordneten Speichermodul 3 zu gewähren. Das Signal auf Leitung 22 «EMA Stopbestätigung» hat eine ähnliche Funktion bezüglich des Satellitenprozessors 6. Jeder der Satellitenprozessoren 5 und 6 empfängt auf den Leitungen 23 bzw. 24 ein Signal «EMA Stopanforderung» vom EIA 9. Jeder der Prozessoren 1, 5 und 6 gibt auf den Leitungen 25, 26 bzw. 27 ein Signal «EXIT» ab, wenn er sich in der letzten Phase in der Ausführung einer Instruktion befindet.

In einem typischen Fall wird das EXIT-Signal von einem Prozessor erzeugt, der mikroprogrammgesteuert ist. In einem derartigen Prozessor wird eine Folge von Mikroinstruktionen, die üblicherweise aus einem Festwertspeicher ausgelesen werden, zur Durchführung einer Makroinstruktion ausgeführt. Die Zykluszeit des Festwertspeichers steuert dabei normalerweise die Ausführungszeit jeder Mikroinstruktion und wird manchmal als Maschinenzykluszeit bezeichnet. Die Zeitspanne eines Maschinenzyklus wird durch Zeitimpulse in kleinere Intervalle unterteilt. Die Bits in jeder Mikroinstruktion dienen zur Steuerung der Logikschaltungen des Prozessors. Diese Bits können entweder einzeln verwendet werden, sie sind manchmal aber auch in Felder zusammengefasst, die dann decodiert werden. Als Beispiel kann die letzte Mikroinstruktion, die in jeder Folge von Mikroinstruktionen zur Darstellung einer Makroinstruktion auftritt, ein aus vier Bits bestehendes Feld aufweisen, dessen Belegung entsprechend einem gewünschten «EXIT»-Muster gewählt ist. Dieses Bitmuster wird dann dem Eingang eines Decodierers zugeführt. Die dadurch aktivierte Ausgangsleitung des Decodierers gelangt zusammen mit einem Zeitimpuls an ein UND-Glied, um das Signal «EXIT» zu erzeugen. Bevor die EXIT-Leitung beaufschlagt wird, prüft der jeweilige Prozessor den Zustand seiner Leitungen für externe Unterbrechungen; ist der Prozessor dabei zur Annahme von Unterbrechungen frei geschaltet, so stellt er den Zustand seiner internen Register so ein, dass die als nächste ausgeführte Instruktion die Instruktion ist, die von der neuen Unterbrechung verlangt wird.

Fig. 4A zeigt die Speicherschnittstellen-Leitungen des Hauptprozessors 1 für Speichermodul 2 ausführlicher als in Fig. 1. Im einzelnen erfolgt der Datenaustausch zwischen Prozessor 1 und Speicher 2 über die beiden Einwegsammelleitungen Bestimmungssammelleitung 28 und Quellensammelleitung 29. In einer anderen Ausführungsform können diese beiden Sammelleitungen auch durch eine einzelne bidirektionale Datensammelleitung ersetzt werden. In einem typischen Fall bestehen die Bestimmungs- und Quellensammelleitungen aus 18 Drähten, mit denen 16 Datenbits und 2 Bits für ungerade Parität übertragen werden können. Die Adresssammelleitung 30 ist beispielsweise eine 16-adrige Sammelleitung, mit der bis zu $2^{16}$ Speicherplätze im Speichermodul 2 adressiert werden können. Jede der Modulauswahlleitungen 31, 32 und 33 ist mit dem zugehörigen Speichermodul 2, 3 oder 4 verbunden. Die Leitungen 32 und 33 sind über zugehörige Auswahltorschaltungen (die später genauer beschrieben werden) mit den zugehörigen Speichermodulen 3 und 4 verbunden. Die Modulauswahlleitung stellt tatsächlich eine Ergänzung der Adressammelleitung dar. Satellitenprozessor 5 kann nur zum Speichermodul 3 zugreifen. Daher hat Prozessor 5 auch nur eine einzige Leitung zur Modulauswahl. Satellitenprozessor 6 kann nur zum Speichermodul 4 zugreifen; er ist deshalb auch nur mit einer einzigen Modulauswahlleitung ausgestattet. Wenn die Steuerleitung 74 für Schreiben aktiviert ist, zeigt sie dem zugehörigen Speicher an, dass ein Einschreibvorgang in den Speicher im Gang ist. Aktiviert der Prozessor die Leitung «EMA Stopbestätigung», so werden gleichzeitig seine Schaltungen für die Speicherschnittstelle in einen Zustand versetzt, bei dem die Schnittstellenleitungen eine hohe Impedanz aufweisen, wodurch ein anderer Prozessor, der mit derselben Speicherschnittstelle verbunden ist, die Pegel der verschiedenen Leitungen der Speicherschnittstelle steuern kann.

Fig. 4B zeigt nähere Einzelheiten der in Fig. 1 angegebenen Verbindungen zwischen Prozessor 1 und Speichermodul 3. Die Quellensammelleitung, Bestimmungssammelleitung, Adresssammelleitung, Auswahlleitung und Schreibsteuerleitung des Prozessors und des Speichers sind miteinander über eine Anzahl von Torschaltungen verbunden, die alle mit der Bezeichnung Torschaltungen 7 versehen sind. Diese Darstellung ist so aufzufassen, dass eine Torschaltung für jede der Leitungen vorgesehen ist, aus denen die Sammelleitungen bestehen. Alle Torschaltungen werden durch ein später zu beschreibendes und mit G2 bezeichnetes Signal gleichzeitig aktiviert. Mit Ausnahme der Tore 7 entsprechen die Verbindungen zwischen Prozessor 1 und Speichermodul 3 den in Fig. 4A dargestellten entsprechenden Verbindungen. Die Verbindungen zwischen Prozessor 1 und Speichermodul 4 sind ähnlich denen in Fig. 4B, mit der Ausnahme, dass ein (später zu beschreibendes) Signal G3 den Torschaltungen 8 zugeführt wird und mit der weiteren Ausnahme, dass eine Modulauswahlleitung 33 an die Torschaltungen 8 auf eine Weise angeschlossen ist, die dem Anschluss der Modulauswahlleitung 32 an die Torschaltungen 7 in Fig. 4B entspricht. Jede der Torschaltungen 7 und 8 ist durch ein Ausgangssignal mit 3 Zuständen charakterisiert. Je nachdem eine der Eingangsleitungen G3 oder G3 aktiv ist, verbinden die Torschaltungen den Zustand ihrer Eingangsleitung mit ihrer Ausgangsleitung. Sind die Eingangssignale G2 oder G3 inaktiv, so wird die Ausgangsleitung auf einem hohen Impedanzwert gehalten, so dass der Zustand der Ausgangsleitung durch ein externes Gerät bestimmt werden kann, das ebenfalls an diese Ausgangsleitung angeschlossen ist. Sind beispielsweise die Torschaltungen 7 inaktiv gemacht, so wird der Zustand jeder Ausgangsleitung dieser Torschaltungen durch den Zustand der jeweiligen Leitung bestimmt, die mit dem Ausgang des Satellitenprozessors 5 verbunden ist. Um zu einem Speichermodul 3 zugreifen zu können, muss Prozessor 1 die Auswahlleitung 32 für Modul 3 aktivieren, ausserdem müssen die Eingangsleitungen G2 für die Torschaltungen aktiviert sein. Bei einem Zugriff zum Speichermodul 4 muss Prozessor 1 die entsprechende Auswahlleitung 33 aktivieren und gleichzeitig muss die Eingangsleitung G3 für die Torschaltungen aktiviert sein.

In Fig. 5 sind die Logikschaltungen der EIA zum Umschalten der Betriebsart im einzelnen dargestellt; drei Steuerflipflops 34 für die Betriebsart, nämlich Flipflop 34 (AUSSCHLIESSLICH BENUTZT), Flipflop 35 (GEMEINSAM BENUTZT 3) und Flipflop 36 (GEMEINSAM BENUTZT 4), können mit Hilfe eines Befehls «Schreibe Betriebsartregister» gesetzt und zurückgesetzt werden, den Prozessor 1 an den Adapter EIA 9 in Fig. 1 schickt. Es gibt insgesamt 5 Betriebsarten, in denen die verschiedenen Speichermodule an die jeweilige Prozessoren geschaltet und teilweise gemeinsam benutzt werden. Die Beziehungen zwischen der Einstellung dieser drei Verriegelungsschaltungen und der entsprechenden Betriebsart für die gemeinsame Benutzung der Speicher sind in der folgenden Tabelle zusammengefasst:

| Betriebsart | GEMEINSAM BENUTZT-3 | GEMEINSAM BENUTZT-4 | AUSSCHLIESSLICH BENUTZT |
|---|---|---|---|
| 1 | zurückgesetzt | zurückgesetzt | ...... |
| 2 | gesetzt | zurückgesetzt | gesetzt |
| 3 | gesetzt | zurückgesetzt | gesetzt |
| 4 | zurückgesetzt | gesetzt | zurückgesetzt |
| 5 | zurückgesetzt | gesetzt | gesetzt |

In Betriebsart 1 benutzt weder Satellitenprozessor 5 noch Satellitenprozessor 6 seinen zugehörigen Speichermodul zusammen mit Prozessor 1. In diesem Fall ist jede der Leitungen 38, 39 und 40 inaktiv. Daher ist auch UND-Glied 42 inaktiv und erzeugt kein Signal «Stopanforderung» auf Leitung 23. In ähnlicher Weise ist UND-Glied 48 inaktiv und auf Leitung 24 wird kein Signal «Stopanforderung» erzeugt. Weder Prozesor 5 noch Prozessor 6 können somit auf den Leitungen 21 bzw. 22 ein Signal «Stopbestätigung» erzeugen.

Die Signale G2 und G3 (die von den Leitungen 21 bzw. 22 abgenommen werden) sind daher inaktiv und verhindern einen Zugriff des Prozessors 1 zu den Speichermodulen 3 und 4.

In Betriebsart 3 kann Prozessor 1 Zugriffe zum Speichermodul 3 unter Ausschluss des Satellitenprozessors 5 durchführen. Bei dieser Betriebsart ist Flipflop 35 gesetzt, Flipflop 36 ist zurückgesetzt und Flipflop 34 ist gesetzt. Beim Setzen von Flipflop 35 ist das Eingangssignal SH-3 des UND-Gliedes 67 aktiv und erlaubt somit dem Signal «EXIT» des Prozessors 5 den Durchgang durch das freigeschaltete Tor 67. Prozessor 5 erzeugt ein Signal «EXIT», wenn die Durchführung einer gerade bearbeiteten Instruktion abgeschlossen ist. Das aktivierte Ausgangssignal des UND-Glieds 67 ist über ODER-Glied 52 auf Leitung 53 geschaltet, um Flipflop 54 zurückzusetzen. Beim Zurücksetzen von Flipflop 54 setzt dessen Ausgangssignal null Flipflop 55, das seinerseits ein Ausgangssignal «1» abgibt, mit dem über Leitung 56 und UND-Glied 42 das Signal «Stopanforderung» auf Leitung 23 erzeugt wird. Als Antwort darauf aktiviert Prozessor 5 Leitung 21 mit dem Signal «Stopbestätigung» und aktiviert so Signal G2, mit dem Prozessor 1 die Erlaubnis erhält, über Torschaltung 7 zum Speichermodul 3 zuzugreifen (Fig. 1).

In Betriebsart 5 greift Prozessor 1 zum Speichermodul 4 zu, wobei Zugriffe des Satellitenprozessors 6 ausgeschlossen sind. Die logische Arbeitsweise ist analog zu der für Betriebsart 3 beschriebenen. Bei Betriebsart 5 ist Flipflop 35 zurückgesetzt, die Flipflops 36 und 34 sind gesetzt.

In Betriebsart 2 benutzt Prozessor 1 Speichermodul 3 gemeinsam mit Satellitenprozessor 5. Prozessor 1 und Prozessor 5 arbeiten dabei abwechselnd, wobei jeder Prozessor aus der Sicht des anderen Prozessors wie ein Gerät vom Typ EMA erscheint. Wenn Prozessor 1 arbeitet, kann er Zugriffe entweder zum Speichermodul 2 oder zum Speichermodul 3 durchführen. In Betriebsart 2 ist Flipflop 35 gesetzt, die Flipflops 36 und 34 sind zurückgesetzt. Die Arbeitsweise der Logikschaltungen wird nun beschrieben, wobei angenommen werden soll, dass anfangs ein Prozessor aktiv und der Partnerprozessor gestoppt ist. Wenn der aktive Prozessor seine gerade laufende Instruktion beendet, aktiviert er sein Signal «EXIT». Dieses Signal ruft ein Signal «Stopanforderung» an denselben Prozessor hervor. Wenn dieser Prozessor dann inaktiv wird und ein Signal «Stopbestätigung» abgibt, wird der Partnerprozessor aktiv. Später erzeugt der Partnerprozessor dann ein Signal «EXIT», um solche Vorgänge auszulösen, die dazu führen, dass der erste Prozessor wiederum aktiv wird. Eine ähnliche Folge von Ereignissen läuft in Betriebsart 4 ab, wenn Hauptprozessor 1 den Speichermodul 4 gemeinsam mit Satellitenprozessor 6 benutzt.

Die bisherigen Erklärungen sollen anhand der folgenden ausführlichen Beispiele weiter erläutert werden; dazu sei angenommen, dass Prozessor 1 seine laufende Instruktion gerade beendet und auf Leitung 25 das Signal «EXIT» aktiviert. Da Flipflop 34 zurückgesetzt ist, gibt UND-Glied 77 das Signal auf Leitung 25 weiter, um Flipflop 78 zurückzusetzen. Das Ausgangssignal «0» von Flipflop 78 läuft durch ODER-Glied 57, um Flipflop 58 zu setzen. Da Flipflop 35 gesetzt ist, wird Leitung 38 aktiviert, um Leitung 40 am Ausgang des ODER-Gliedes 59 zu aktivieren. Das Aktivieren von Leitung 40 ermöglicht es UND-Glied 60, das Signal «Stopanforderung» auf Leitung 19 zu setzen, wenn am Ausgang von Flipflop 58 der binäre Wert «1» erscheint. Prozessor 1 wird dann inaktiv und erzeugt ein Signal «Stopbestätigung» auf Leitung 20. Vor dem Erscheinen des Signals «Stopbestätigung» auf Leitung 20 wurde Flipflop 54 über Inverter 65 gesetzt. Das Setzen von Flipflop 54 erzeugt ein Ausgangssignal «1», das beim Auftauchen des Signals «Stopbestätigung» auf Leitung 20 durch UND-Glied 63 läuft. Das aktivierte Ausgangssignal von UND-Glied 63 läuft über ODER-Glied 64, um Flipflop 55 zurückzusetzen und somit Leitung 56 abzuschalten. Dadurch setzt UND-Glied 42 das Signal «Stopanforderung» auf Leitung 23 für Prozessor 5 zurück, so dass Prozessor 5 aktiv wird. Wenn später Prozessor 5 seine Instruktion beendet hat und sein Signal «EXIT» auf Leitung 26 aktiviert, erzeugt UND-Glied 67 das Signal auf Leitung 53 am Ausgang des ODER-Glieds 52. Das Signal auf Leitung 53 setzt Flipflop 54 zurück. Der Zustand «0» des Flipflops 54 setzt Flipflop 55, mit dem Leitung 56 aktiviert wird. Das Signal auf Leitung 56 bewirkt, dass UND-Glied 42 ein Signal «Stopanforderung» auf Leitung 23 abgibt. Das folgende Signal «Stopbestätigung» auf Leitung 21 läuft über das frei geschaltete UND-Glied 68, um auf Leitung 69 ein Ausgangssignal zu erzeugen (das Ausgangssignal des ODER-Glieds 70); damit wird UND-Glied 71 aktiviert, das wiederum Flipflop 58 zurücksetzt und somit den Operationszyklus beendet. Flipflop 78 wird bei Fehlen eines Ausgangssignals auf Leitung 69 durch Inverter 72 gesetzt.

Die Tabelle in Fig. 6 zeigt die Reihenfolge der Zustände, die von der in Fig. 5 dargestellten Logikschaltung durchlaufen werden; sie dient zur weiteren Erläuterung der Arbeitsweise der vorliegenden Erfindung, wenn Hauptprozessor 1 und Satellitenprozessor 5 gemeinsam einen Speichermodul 3 benutzen. Das in der Tabelle enthaltene Minuszeichen stellt das Fehlen eines Signals dar, das Pluszeichen ein aktiviertes Signal. Zur Zeit Null sind sowohl Flipflop 35 als auch 36 zurückgesetzt. Unter dieser Bedingung sind alle drei Leitungen 19, 23 und 24 «Stopanforderung» aktiv. Alle Prozessoren können gleichzeitig Speicheroperationen in den ihnen zugeordneten Speichermodulen durchführen, beispielsweise kann Prozessor 1 zu Speichermodul 2 zugreifen, Satellitenprozessor 5 kann zu Speichermodul 3 zugreifen und Satellitenprozessor 6 zu Speichermodul 4.

Zur Zeit 1 wird Flipflop 35 infolge eines von Prozessor 1 an EIA 9 gesandten E/A-Befehls gesetzt. Zuerst arbeiten dann sowohl Prozessor 1 als auch Prozessor 5 noch weiter. Jedoch wird Leitung 19 «Stopanforderung» aktiv und zwar aufgrund der Aktivierung von Leitung 40 am Ausgang des ODER-Glieds 59, mit dem UND-Glied 60 zur Aktivierung von Leitung 19 veranlasst wird. Bevor Prozessor 1 eine Speicherzugriffsoperation durchführen kann, wird zur Zeit T2 seine Leitung 20 «Stopbestätigung» aktiv. Prozessor 1 wird nun inaktiv, während Prozessor 5 weiterhin aktiv bleibt. Nach einiger Zeit wird das Signal «EXIT» von Prozessor 5 auf Leitung 26 aktiv (Zeit 3.1). Das führt zu der Zustandsänderung, die in Fig. 6 für die Zeitpunkte 3.1 und 3.2 dargestellt ist. Prozessor 5 bleibt aktiv und Prozessor 1 inaktiv nach dem Verschwinden des EXIT-Impulses auf Leitung 26, entsprechend der Darstellung für Zeitpunkt 3.3. Jedoch wurde das Signal «Stopanforderung» zur Zeit 3.2 auf Leitung 23 aktiviert. Zur Zeit 4.1 aktiviert Prozessor 5 sein Signal «Stopbestätigung» auf Leitung 21 und schaltet somit das Signal auf Leitung 19 «Stopanforderung» ab. Zur Zeit 4.2 wird auch die Leitung 20 «Stopbestätigung» inaktiv. Zu diesem Zeitpunkt wird Prozessor 1 aktiv und Prozessor 5 inaktiv.

Der Rest von Fig. 6 sollte aufgrund der bisherigen Erläuterung ohne weiteres verständlich sein. Die Zeitpunkte 5.1, 5.2 und 5.3 sind analog zu den Zeitpunkten 3.1, 3.2 und 3.3. Ebenso entsprechen die Zeitpunkte 6.1 und 6.2 den Zeitpunkten 4.1 und 4.2.

**Patentansprüche**

1. Multiprozessorsystem, bestehend aus mehreren Prozessoren (1, 5, 6) mit individuell zugeordneten Speichern (2, 3, 4) und einem Adapter (9) zur Steuerung des Zugriffs mindestens eines Prozessors zu einem Speicher mindestens eines anderen Prozessors über Verbindungssammelleitungen, dadurch gekennzeichnet, dass auch bei mehr als zwei Prozessoren alle an den gemeinsamen Adapter (9) angeschlossen sind, dass jedem Prozessor (z.B. 1) eine Speichersammelleitung (100) zugeordnet ist, an die auch alle Speicher (z.B. 3, 4) fremder Prozessoren, zu denen der Prozessor zugreifen kann, über Torschaltungen (7, 8) angeschlossen sind und dass der Adapter (9) Einrichtungen (34 bis 36) zur Speicherung einer wählbaren Zugriffsbetriebsart sowie Steuereinrichtungen (42, 52, 54, 55, 57 bis 60, 63 bis 65, 67, 68, 70 bis 72, 77, 78) enthält, die Steuersignale an die Torschaltungen (7, 8) und Prozessoren abgeben, so dass abhängig von der gewählten Zugriffsbetriebsart jeder Prozessor Zugriff entweder nur zu seinem zugeordneten Speicher erhält oder ausgewählte Prozessoren exklusiven Zugriff zu Speichern ausgewählter anderer Prozessoren erhalten oder dass zu Speichern ausgewählter Prozessoren ausgewählte andere Prozessoren alternativ zugreifen können.

2. Multiprozessorsystem nach Anspruch 1, dadurch gekennzeichnet, dass der Adapter (9) den Zugriff von Prozessoren zu alternativ benutzbaren Speichern so steuert, dass er nach Empfang eines Signals (EXIT) von einem ersten Prozessor, der gerade einen Verarbeitungsschritt beendet hat, ein an sich für direkte Speicherzugriffe bekanntes Signal «Stopanforderung» an den ersten Prozessor abgibt, um ihn damit zu stoppen und dass dieser erste Prozessor daraufhin ein ebenfalls für direkte Speicherzugriffe bekanntes Signal «Stopbestätigung» an den Adapter und an die Torschaltungen (7, 8) der Speichersammelleitung liefert, um einen zweiten, den betreffenden Speicher gemeinsam benutzenden Prozessor zu starten und dessen Verbindungen zu diesem Speicher für einen Verarbeitungsschritt freizuschalten.

3. Multiprozessorsystem nach Anspruch 2, dadurch gekennzeichnet, dass der Verarbeitungsschritt eine Mikroinstruktion ist.

4. Multiprozessorsystem nach einem der Ansprüche 1 bis 3, dadurch gekennzeichnet, dass der Adapter (9) an Eingabe-/Ausgabe-Sammelleitungen (10, 11, 12) mindestens derjenigen Prozessoren angeschlossen ist, die Zugriffe zu mehr als einem Speicher durchführen können, und dass er für diese Prozessoren die Funktion eines normalen Eingabe-/Ausgabe-Geräts erfüllt.

5. Multiprozessorsystem nach Anspruch 4, dadurch gekennzeichnet, dass im Adapter (9) Status- und Pufferregister (13, 16; 14, 17; 15, 18; Fig. 3) mit Anschlüssen an die Eingabe-/Ausgabe (E/A)-Sammelleitungen (10, 11, 12) des jeweiligen Prozessors vorgesehen sind, und dass die Pufferregister über entsprechend dem Inhalt der Statusregister steuerbare Torschaltungen (80, 81, 84, 85) an die E/A-Sammelleitungen aller oder einiger anderer Prozessoren anschliessbar sind.

6. Multiprozessorsystem nach einem der Ansprüche 1 bis 5, dadurch gekennzeichnet, dass mindestens einer der Prozessoren (Hauptprozessor 1) die im Adapter (9) gespeicherte Zugriffsbetriebsart verändern kann.

**Claims**

1. Multiprocessor system, consisting of several processors (1, 5, 6) with individually associated memories (2, 3, 4), and an adapter (9) to control the access of at least one processor to a storage of at least one further processor via connecting busses, characterized in that even if there are more than two processors they are all connected to the common adapter (9), that each processor (e.g. 1) has an associated storage bus line (100) to which are also connected via gates (7, 8) all those memories (e.g. 3, 4) of other processors which the processor can access, and that the adapter (9) comprises devices (34 to 36) to store a selectable mode of access, as well as control devices (42, 52, 54, 55, 57 to 60, 63 to 65, 67, 68, 70 to 72, 77, 78) supplying control signals to the gates (7, 8) and processors, so that as a function of the access mode selected each processor can access either only its associated memory, or selected processors have exclusive access to memories of predetermined other processors, or that predetermined other processors can alternatively access memories of predetermined processors.

2. Multiprocessor system as claimed in claim 1, characterized in that the adapter (9) controls the access of processors to alternatively usable memories in such a manner that after receipt of a signal (EXIT) from a first processor that has just completed a processing step, it supplies to the first processor a signal "stop request" known per se for direct storage accesses, to stop said first processor, and that subsequently this first processor supplies a signal "stop acknowledge" equally known for direct memory accesses, to the adapter and to the gates (7, 8) of the memory bus to start a second processor jointly using the respective memory, and to release its connections to this memory for a processing step.

3. Multiprocessor system as claimed in claim 2, characterized in that the processing step is a microinstruction.

4. Multiprocessor system as claimed in one of claims 1 to 3, characterized in that the adapter (9) is connected to input/output busses (10, 11, 12) of at least those processors which can access more than one memory, and that for these processes it executes the function of a conventional input/output device.

5. Multiprocessor system as claimed in claim 4, characterized in that the adapter (9) status and buffer registers (13, 16; 14, 17; 15, 18; Fig. 3) with connections to the input/output (I/O) busses (10, 11, 12) of the respective processor are provided, and that the buffers can be connected via gates (80, 81, 84, 85) controllable in accordance with the contacts of the status registers, to the I/O busses of all or of several other processors.

6. Multiprocessor system as claimed in any one of claims 1 to 5, characterized in that at least one of the processors (main processor 1) can alter the access mode stored in the adapter (9).

**Revendications**

1. Système multiprocesseur comportant plusieurs processeurs (1, 5, 6) ayant des mémoires individuellement associées (2, 3, 4), ainsi qu'un adaptateur (9) pour commander l'accès d'au moins un processeur à une mémoire d'au moins un autre processeur à travers des lignes communes de connexion, caractérisé en ce que tous les processeurs, même s'il y en a plus de deux, sont connectés audit adaptateur (9), en ce que chaque processeur (par exemple 1) est associé à une ligne commune de mémoire (100) à laquelle sont connectées, à travers des portes (7, 8) toutes les mémoires (par exemple 3, 4) des autres processeurx auxquelles le processeur a accès, et en ce que l'adaptateur (9) comporte des dispositifs (34 à 36) pour stocker un mode d'accès sélectable, ainsi que des dispositifs de commande (42, 52, 54, 55, 57 à 60, 63 à 65, 67, 68, 70 à 72, 77, 78) fournissant des signaux de commande aux portes (7, 8) et aux processeurs, de telle sorte que, en fonction du mode d'accès choisi, chaque processeur a seulement accès à la mémoire qui lui est associée, ou que des processeurs sélectionnés ont un accès exclusif aux mémoires d'autres processeurs sélectionnés, ou que d'autres processeurs sélectionnés ont alternativement accès aux mémoires de processeurs sélectionnés.

2. Système multiprocesseur selon la revendication 1, caractérisé en ce que ledit adaptateur (9) commande l'accès des processeurs aux mémoires alternativement utilisées de telle sorte qu'après avoir reçu un signal (EXIT) d'un premier processeur qui vient juste de terminer un processus de traitement, cet adaptateur fournit au premier processeur un signal «demande d'arrêt» connu pour être utilisé pour l'accès direct de la mémoire afin de l'arrêter, et en ce que ledit premier processeur fournit ensuite à l'adaptateur et aux portes (7, 8) de la ligne commune de mémoire un signal «confirmation d'arrêt» également connu pour être utilisé pour l'accès direct de la mémoire afin d'activer un second processeur utilisant ladite mémoire en commun et afin de libérer ses connexions avec ladite mémoire pour une étape de traitement.

3. Système multiprocesseur selon la revendication 2, caractérisé en ce que l'étape de traitement constitue une micro-instruction.

4. Système multiprocesseur selon l'une des revendications 1 à 3, caractérisé en ce que l'adaptateur (9) est connecté aux lignes communes d'entrée/sortie (10, 11, 12) d'au moins ceux des processeurs qui peuvent accéder à plus d'une mémoire et en ce qu'il remplit pour lesdits processeurs la fonction d'un dispositif d'entrée/sortie normal.

5. Système de multiprocesseur selon la revendication 4, caractérisé en ce que l'adaptateur (9) comporte des registres d'état et des registres intermédiaires (13, 16; 14, 17; 15, 18; figure 3) ayant des connexions avec les lignes communes d'entrée/sortie (E/S) (10, 11, 12) du processeur respectif, et en ce que les registres intermédiaires peuvent être connectés, à travers des portes (80, 81, 84, 85) commandées en fonction du contenu du registre d'état, aux lignes communes E/S de tous les processeurs ou de plusieurs autres processeurs.

6. Système multiprocesseur selon l'une quelconque des revendications 1 à 5, caractérisé en ce qu'au moins un des processeurs (processeur principal 1) peut modifier le mode d'accès stocké dans l'adaptateur (9).

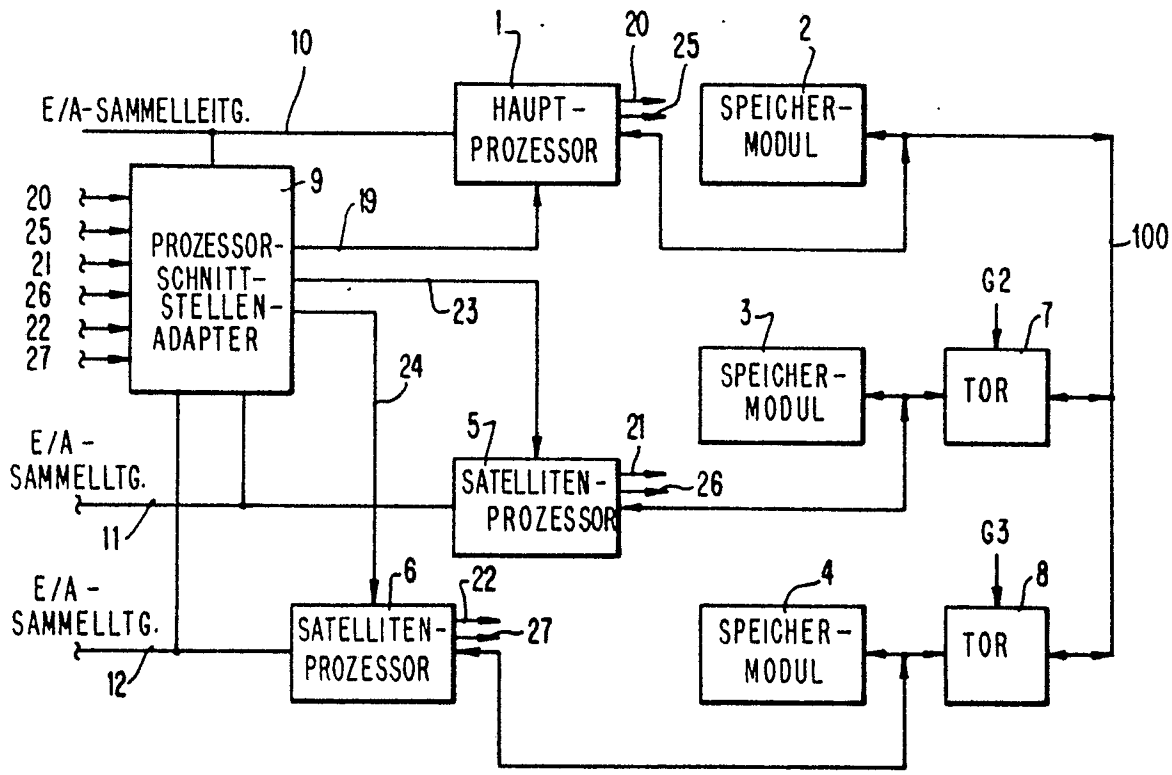

E/A-SAMMELLEITG.
10
1
HAUPT-
PROZESSOR
20
25
2
SPEICHER-
MODUL
20
25
21
26
22
27
PROZESSOR-
SCHNITT-
STELLEN-
ADAPTER
9
19
23
24
100
G2
7
3
SPEICHER-
MODUL
TOR
E/A-
SAMMELLTG.
11
5
SATELLITEN-
PROZESSOR
21
26
G3
8
E/A-
SAMMELLTG.
12
6
SATELLITEN-
PROZESSOR
22
27
4
SPEICHER-
MODUL
TOR


FIG. 1

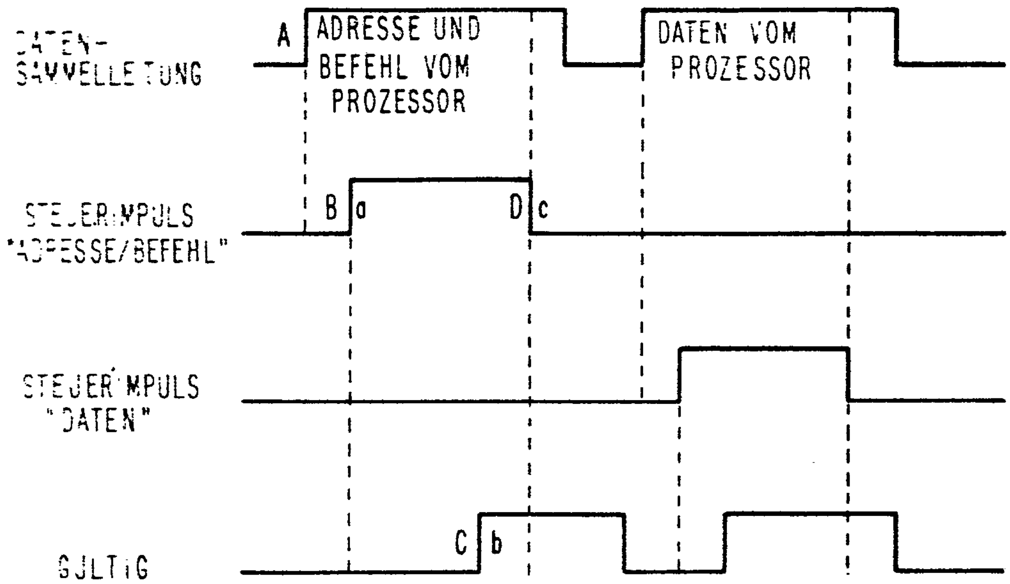
A
ADRESSE UND
BEFEHL VOM
PROZESSOR
DATEN VOM
PROZESSOR
B
a
D
c
C
b

FIG. 2A

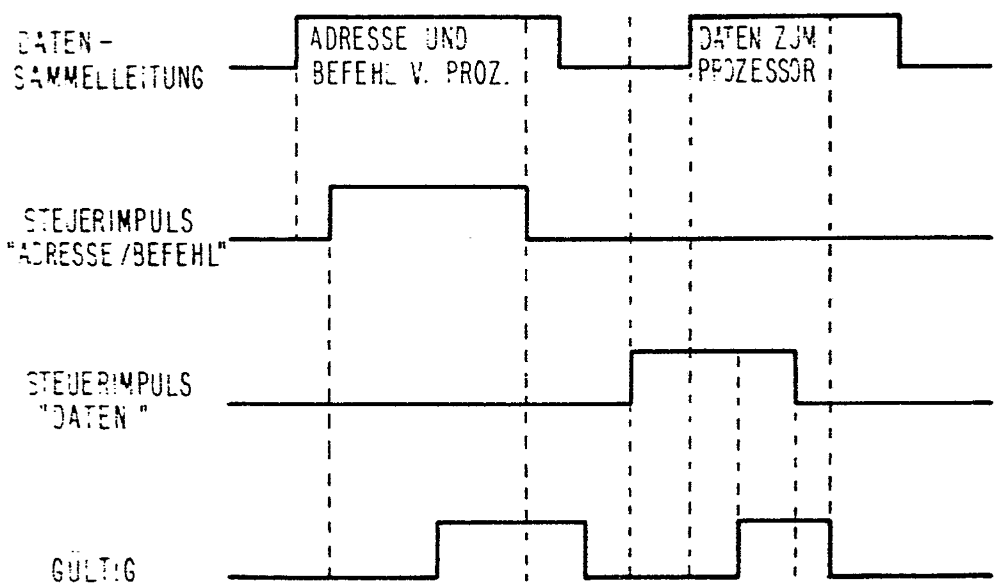
ADRESSE UND
STEUERIMPULS

FIG. 2B

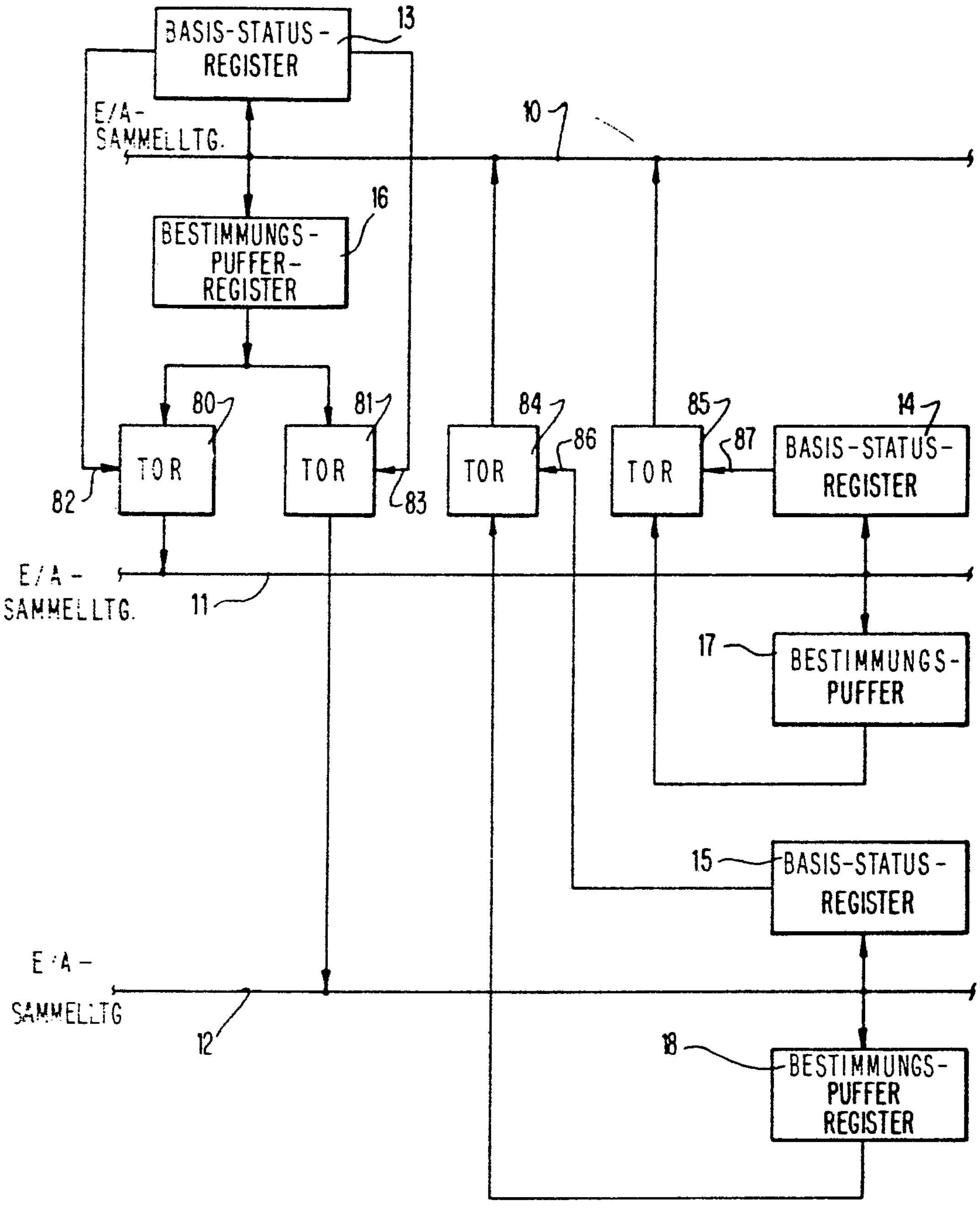
BASIS-STATUS-REGISTER
13
E/A-SAMMELLTG.
10
BESTIMMUNGS-PUFFER-REGISTER
16
80
81
84
85
14
TOR
TOR
TOR
TOR
86
87
BASIS-STATUS-REGISTER
82
83
E/A-SAMMELLTG.
11
17
BESTIMMUNGS-PUFFER
15
BASIS-STATUS-REGISTER
E/A-SAMMELLTG
12
18
BESTIMMUNGS-PUFFER REGISTER

FIG. 3

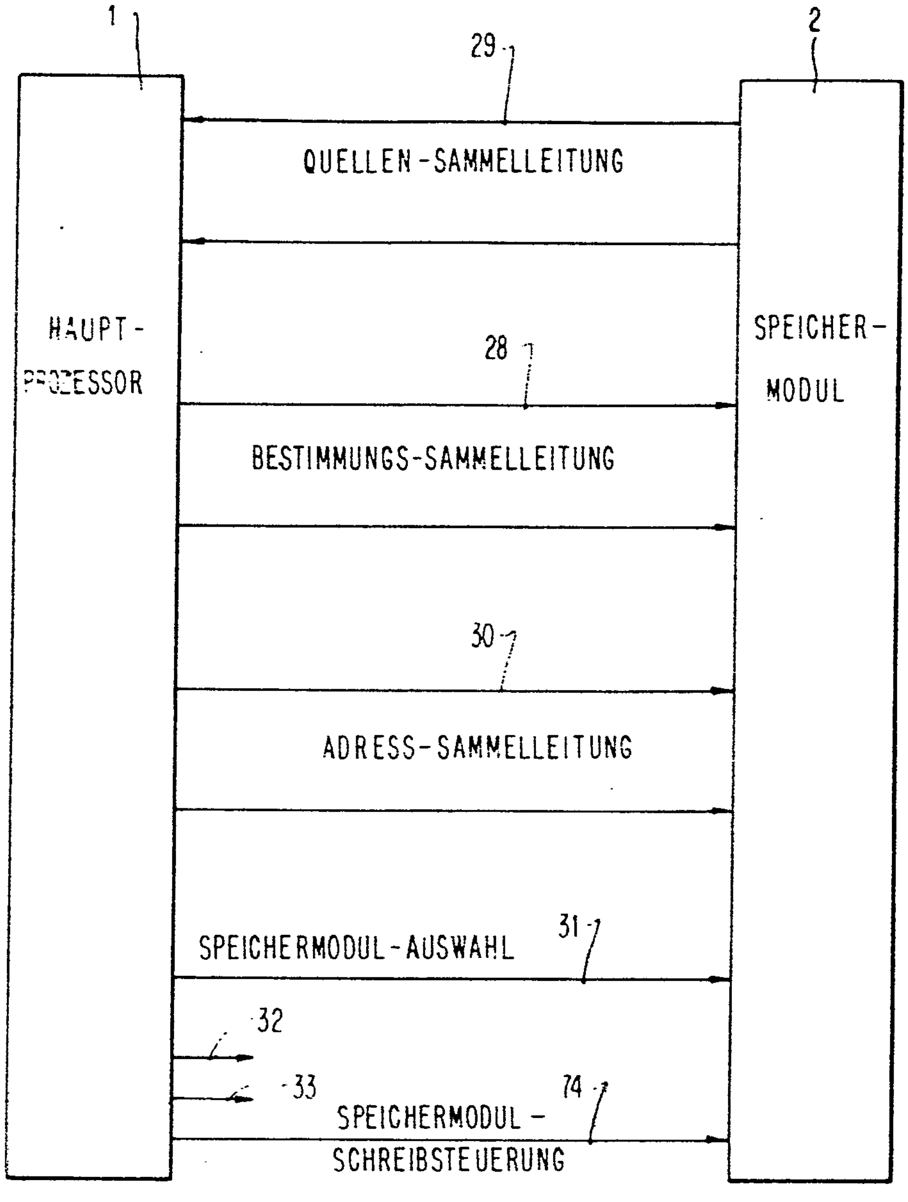
1
2
29
QUELLEN-SAMMELLEITUNG
HAUPT-
PROZESSOR
SPEICHER-
MODUL
28
BESTIMMUNGS-SAMMELLEITUNG
30
ADRESS-SAMMELLEITUNG
SPEICHERMODUL-AUSWAHL
31
32
33
74
SPEICHERMODUL -
SCHREIBSTEUERUNG

FIG. 4A

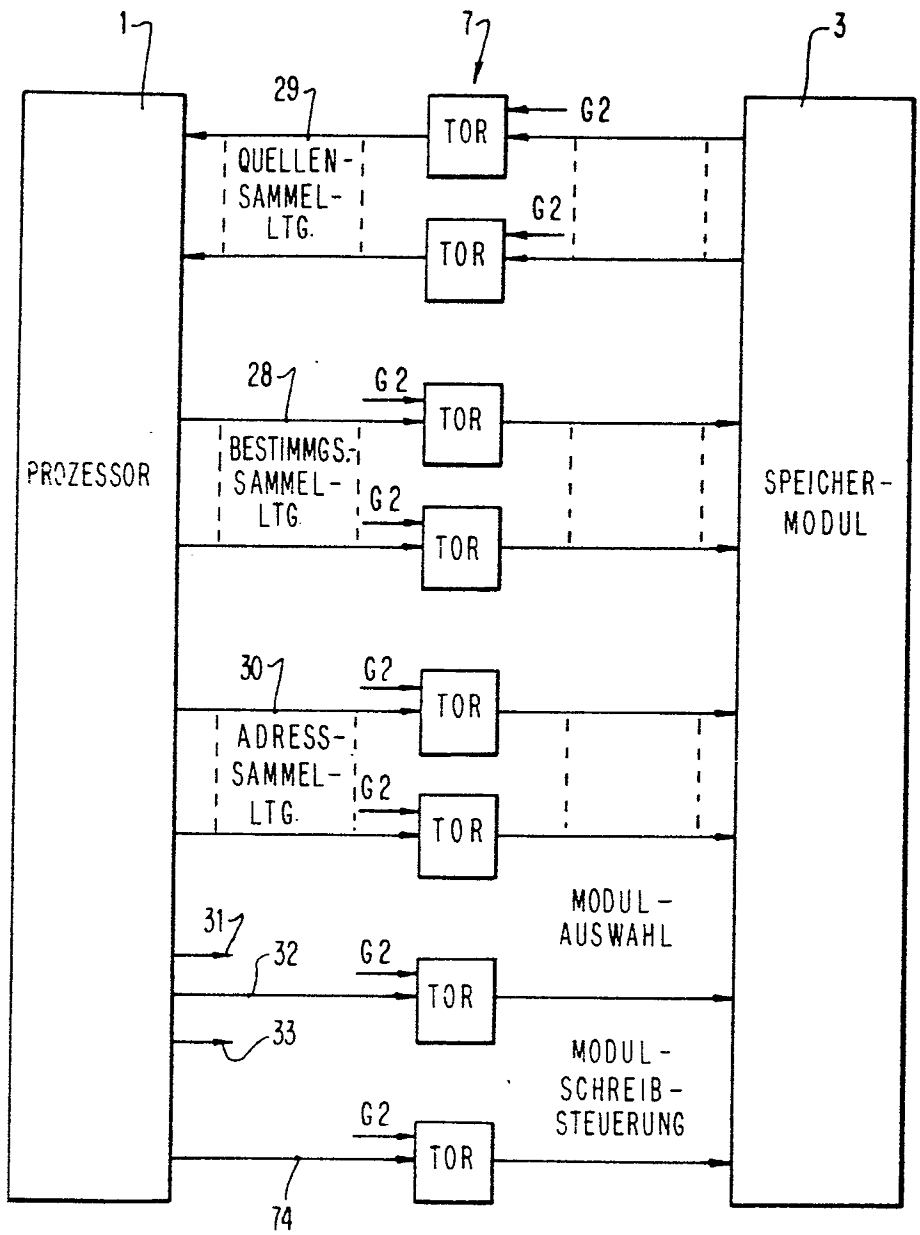
1
7
3
29
TOR
G2
QUELLEN-
SAMMEL-
LTG.
G2
TOR
28
G2
TOR
BESTIMMGS.-
SAMMEL-
LTG.
G2
TOR
PROZESSOR
SPEICHER-
MODUL
30
G2
TOR
ADRESS-
SAMMEL-
LTG.
G2
TOR
MODUL-
AUSWAHL
31
32
G2
TOR
33
MODUL-
SCHREIB-
STEUERUNG
G2
TOR
74

FIG. 4B

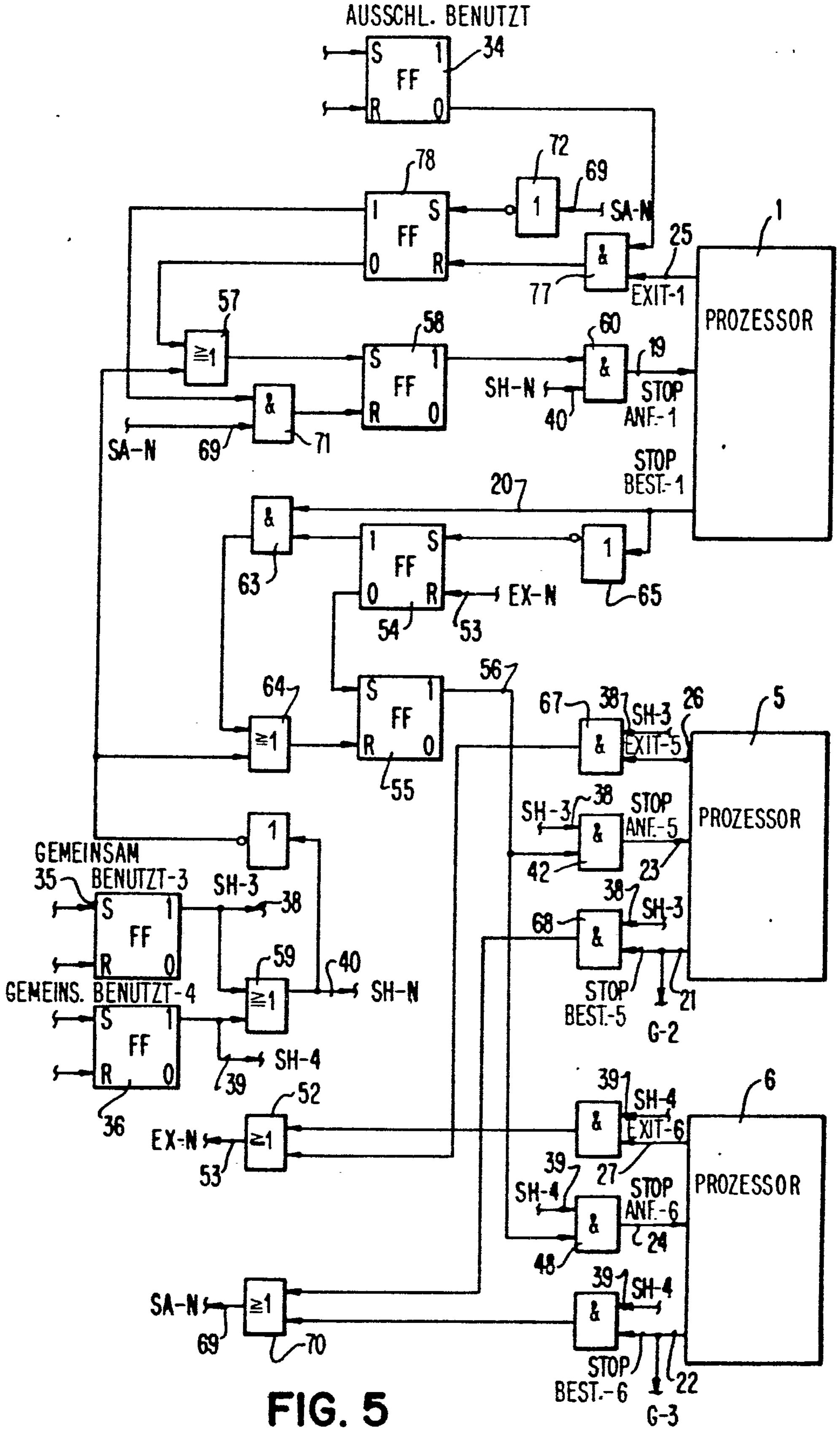
AUSSCHL. BENUTZT
FF
34
78
72
69
SA-N
25
1
77
EXIT-1
PROZESSOR
57
58
60
19
SH-N
40
STOP
ANF.-1
SA-N
69
71
STOP
BEST.-1
20
63
65
EX-N
54
53
56
64
55
67
38
SH-3
26
5
EXIT-5
PROZESSOR
STOP
ANF.-5
42
23
GEMEINSAM
BENUTZT-3
35
59
SH-N
GEMEINS. BENUTZT-4
SH-4
39
36
68
STOP
BEST.-5
21
G-2
52
EX-N
53
6
SH-4
EXIT-6
27
PROZESSOR
STOP
ANF.-6
24
48
SA-N
69
70
STOP
BEST.-6
22
G-3

FIG. 5

| ZEIT | PROZ 1 | PROZ. 5 | FF-56 | FF-58 | FF-54 | FF-55 | STOP ANFOR. 19 | STOP BESTÄT. 20 | EXIT 25 | STOP ANFORD 23 | STOP BESTAT 21 | EXIT 26 | GEMEIN. BENUTZT FF-35 | AUSSCH. REN. FF-34 | TOR 7 | TOR 8 |
|---|---|---|---|---|---|---|---|---|---|---|---|---|---|---|---|---|
| 0 | EIN | EIN | | GESETZT | GESTZT. | ZUR. GES. | – | – | +/– | – | – | +/– | ZUR.GES | ZUR. GES. | OFFEN | OFFEN |
| 1 | EIN | EIN | GESTZT. | GESTZT. | GESTZT. | ZUR.GES | + | – | – | – | – | – | GESTZT. | ZUR.GES. | OFFEN | OFFEN |
| 2 | AUS | EIN | GESTZT. | GESTZT. | GESTZT. | ZUR.GES. | + | + | – | – | – | – | GESTZT. | ZUR.GES. | OFFEN | OFFEN |
| 3,1 | AUS | EIN | GESTZT. | GESTZT. | ZÜR.GES. | ÄNDERG. | + | + | – | – | – | + | GESTZT. | ZUR.GES. | OFFEN | OFFEN |
| 3,2 | AUS | EIN | GESTZT. | GESTZT. | ZUR.GES. | GESTZT. | + | + | – | + | – | + | GESTZT. | ZUR.GES. | OFFEN | OFFEN |
| 3,3 | AUS | EIN | GESTZT. | GESTZT. | ZUR.GES. | GESTZT. | + | + | – | + | – | – | GESTZT. | ZUR.GES. | OFFEN | OFFEN |
| 4,1 | AUS | AUS | GESTZT. | ZUR.GES. | ZUR.GES. | GESTZT. | – | ÄNDERG. | – | + | + | – | GESTZT. | ZUR.GES. | DRCHG. | OFFEN |
| 4,2 | EIN | AUS | GESTZT. | ZUR.GES. | GESTZT. | GESTZT. | – | – | – | + | + | – | GESTZT. | ZUR.GES. | DRCHG. | OFFEN |
| 5,1 | EIN | AUS | ZUR.GES. | ÄNDERG. | GESTZT | GESTZT. | – | – | + | + | + | – | GESTZT. | ZUR.GES. | DRCHG. | OFFEN |
| 5,2 | EIN | AUS | ZUR.GES. | GESTZT. | GESTZT. | GESTZT. | + | – | + | + | + | – | GESTZT. | ZUR.GES. | DRCHG | OFFEN |
| 5,3 | EIN | AUS | ZUR.GES. | GESTZT. | GESTZT. | GESTZT. | + | – | – | + | + | – | GESTZT. | ZUR.GES. | DRCHG. | OFFEN |
| 6,1 | AUS | AUS | ÄNDERG. | GESTZT | GESTZT. | ZUR.GES | + | + | – | – | ÄNDERG. | – | GESTZT. | ZUR.GES. | ÄNDERG. | OFFEN |
| 6,2 | AUS | EIN | GESTZT. | GESTZT. | GESTZT | ZUR.GES. | + | + | – | – | – | – | GESTZT. | ZUR.GES. | OFFEN | OFFEN |

FIG. 6